# EUROPEAN PATENT SPECIFICATION

(11) **EP 0 944 966 B1**
(45) Date of publication and mention of the grant of the patent: **30.01.2008**
(21) Application number: 97948053.0
(22) Date of filing: 20.11.1997
(51) Int. Cl.: H04B 7/155, H04N 7/20

(54) **Broadband radio access**
Breitband Funkzugriff
Accés radio à bande large

(30) Priority: 09.12.1996 SE 9604533
(43) Date of publication of application: 29.09.1999
(73) Proprietor: TeliaSonera AB, 123 86 Farsta (SE)
(72) Inventor: WICKMAN, Johan, S-237 35 Bjärred (SE); BENGTSSON, Roger, SE-21642 Limhamn (SE)
(74) Representative: Akerman, Marten Lennart
(86) International application number: PCT/SE1997/001944
(87) International publication number: WO 1998/026520

(56) References cited:
- EP-A- 0 756 392
- WO-A-95/25409

## Description

### Field of the invention

The present invention relates to a system, a device and a method for broadband radio access with high degree of coverage and high system capacity.

### Prior art

WO95/25409 A1 discloses a communications apparatus which includes a first transmitting antenna array having a transmitting antenna which is dedicated to serve only a first sector. Similarly, a second transmitting antenna array having a transmitting antenna is dedicated to serve only a second sector. Each of the transmitting antenna arrays have a beamwidth of generally less than fifteen degrees. Both the first and the second transmitting antenna arrays emanate shaped beams which are alternately polarized to ensure the isolation of beams that serve adjacent sectors.

In the following description Millimetrewave (ML) systems and Microwave (MK) systems are used as common term for LMDS, MVDS and HPMP, respective MMDS and terrestrial TV.

LMDS (Local Multipoint Distribution Service), MVDS (Multipoint Video Distribution System) and HPMP (High capacity Point to Multipoint) are examples of fixed point to multipoint millimetrewave radio systems which operate on frequencies over 10 GHz. Fixed high frequency systems make possible simple construction of cellular systems where a very good frequency utilization factor (≤ 1) can be achieved. The supply of unoccupied frequency band furthermore is good over 20 GHz, so one all in all will get a very good system capacity. LMDS, MVDS and HPMP will be described more in detail under the title "Detailed description of an embodiment of the invention".

A problem at using frequencies over about 10 GHz is that there principally is required line-of-sight (LOS) between a base station (BS) and the subscriber's terminal antenna (ATA), because diffraction around, respective penetration through, obstacles is small. The LOS-demand has been verified by initial propagation measurements at Telia Research and results from Bellcore and Texas Instruments.

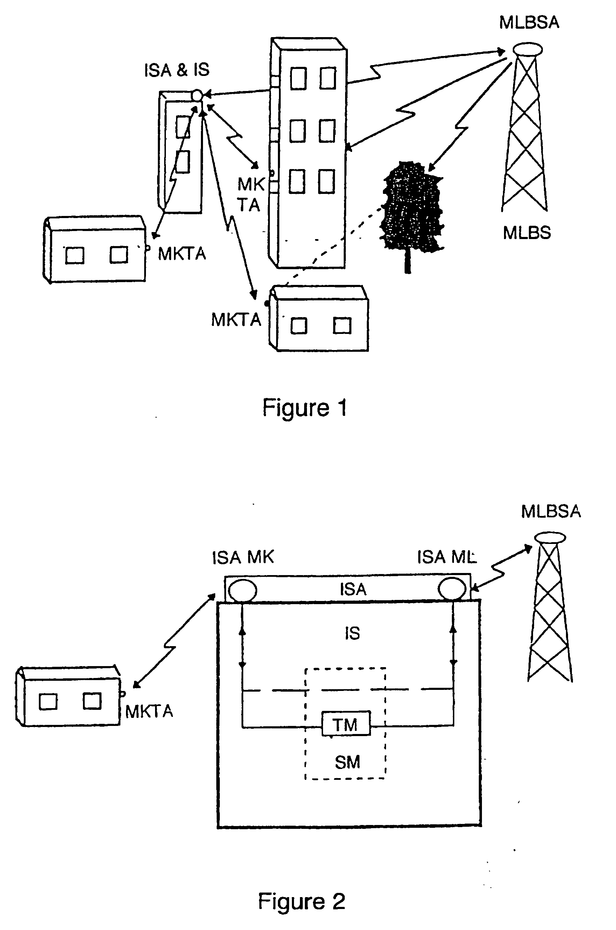

This problem is biggest for subscribers in low buildings with higher surrounding vegetation and buildings, for instance villas in "grown up" residential areas and backsides of houses standing in the way (see Figure 1). The range also is limited to be less than about 5 km from the base station (also at LOS) due to high propagation attenuation and attenuation by rain.

MMDS (Multichannel Multipoint Distribution Service) and terrestrial TV are examples of fixed microwave radio systems which operates on frequencies under 10 GHz. At these frequencies, and above all for frequencies under about 5 GHz, however, line-of-sight between a base station antenna (BSA) and a terminal antenna, ATM, is required to a considerably less extent, because the penetration- and diffraction properties are more favourable. This will increase the number of subscribers which can be covered (the so called degree of coverage is increased). This advantage of better degree of coverage, combined with low supply of free frequencies under 10 GHz, however, give rise to a technical problem.

This technical problem is constituted by a low frequency repeating factor which brings about low system capacity. This consequently results in that if a large number of subscribers can be covered, then only a smaller part of these can utilize the MK-system due to its low capacity. Certainly MK-systems often utilize higher modulation level, i.e one transmits a larger amount of information per modulation symbol. This, however, results in demands for an increased signal-/noise ratio, so the frequency repeating factor will be even lower. The total system capacity in cellular applications therefore will not necessary increase for MK-systems with high modulation level.

Typical features for fixed radio systems which operate on frequencies under 10 GHz (MK-systems), respective over 20 GHz (ML-systems) are summed up in Table 1.

**Table 1: Freqency comparison for fixed, broadband radio access. The comparison is comprehensive and describes typical differences rather than abolute data.**

| Features | Frequency | |
|---|---|---|
| | MK-system | ML-system |
| | < 10 GHz | > 20 GHz |
| Range: | high | medium |
| | (typically <50 km) | (typically <5 km) |
| Frequency repetition: | low - medium | good |
| Modulation: | 4-6 bit per symbol | 2 bit per symbol |
| Demand for line-of-sight: | medium | high |
| Supply of bandwidth: | low - medium | high |
| Uplink: | low capacity | medium - high capacity |
| Physical size, directional antenna: | medium | small |

### Summary of the invention

The aim of the present invention consequently is to solve the above discussed problem. This aim is achieved by a method according to claim 1.

The present invention consequently leads to that, by a new combined use of micro- and millimetrewave systems, the problems of respective system are evaded, wheras the advantages are utilized. One accordingly gets a system which combines high degree of coverage with high system capacity.

The invention is constituted by an integration of a microwave system with a millimetrewave system so that the qualities of the integrated system is optimized. By combining micro- and millimetrewave systems it will be possible to in a very flexible way construct an optimal infrastructure for different types of areas. Degree of coverage and range by that can be strongly improved, where respective system is utilized for the task for which it is best suited.

Further characteristics of the invention are given in the subclaims.

In the following a detailed description of an embodiment of the invention is given with reference to the enclosed drawings.

### Brief description of the drawings

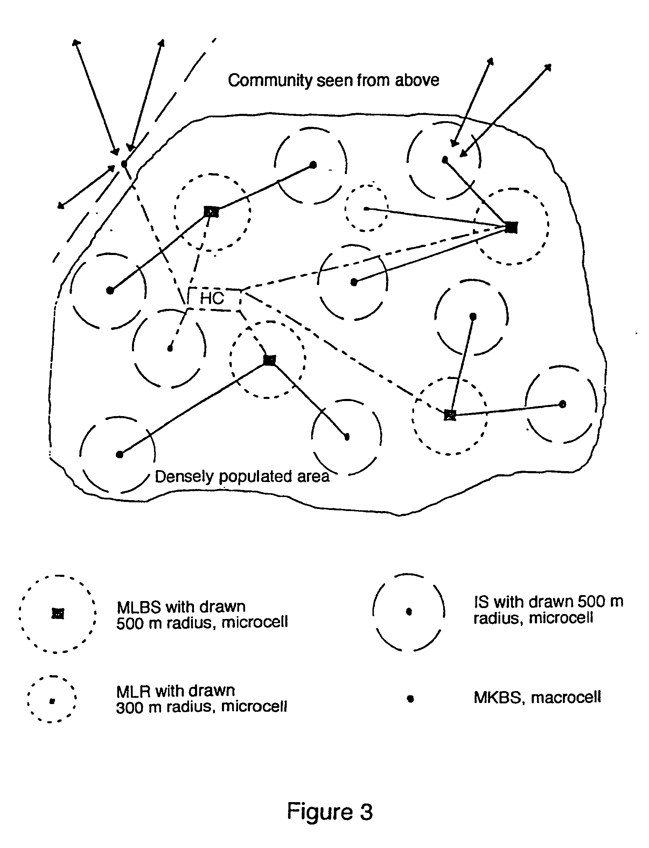

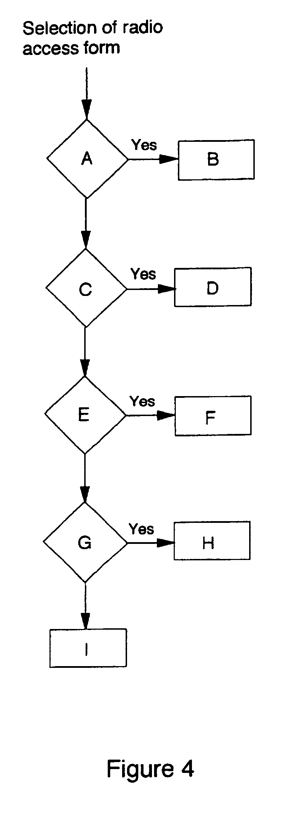

Figure 1 shows schematically a scenario where the invention is used;
   - MLBS =: Millimetrewave base station
   - MLBSA =: Millimetrewave base station antenna
   - IS =: IMMBRA-station
   - ISA =: IMMBRA-station antenna
   - MKTA =: Micrometrewave terminal antenna
Figure 2 shows schematically how the integration unit according to the present invention is constructed;
   - IMMBRA =: Integration of Micro- and Millimetre-wave systems for Broadband Radio Access
   - IS =: IMMBRA station
   - ISA =: IMMBRA station antenna
   - ISA MK =: ISA microwave
   - ISA ML =: ISA millimetrewave
   - MKTA =: Micrometrewave terminal antenna
   - MLBSA =: Millimetrewave base station antenna
   - TM =: Transmodulator
   - SM =: Control module
Figure 3 shows coverage areas for different stations according to the present invention;
   - HC =: Main central
   - MLR =: ML-repeater
   - IS =: IMMBRA station
Figure 4 shows a radio access form according to the present invention..
   - A =: LOS to MLBS ?
   - B =: Select connection via MLBS.
   - C =: Coverage by IS ?
   - D =: Select connection via IS.
   - E =: Broadband interactive need ?
   - F =: Select connection via other media.
   - G =: Coverage by MKBS ?
   - H =: Select connection via MKBS.
   - I =: Select connection via other media.

### Detailed description of an embodiment of the invention

First of all a general description of radio systems with connection to the invention will be given. After that the IMMBRA-system (Integration of Micro- and Millimetre wave systems for Broadband Radio Access) according to the invention will be described with reference to the Figures, above all to the Figures 1 and 2.

LMDS is of American origin and includes distributive and two-way fixed broadband services. LMDS-systems are allocated around 28 GHz (1 GHz bandwidth) but will probably be licensed also on the 41 GHz band (2 GHz bandwidth). The higher frequency band is the same as on which the MVDS-systems in Europe will operate. A difference between MVDS and LMDS is that MVDS originally was intended as a distributive system. Several manufacturers, however, are on their way producing a return channel also for MVDS-systems, which will make the systems more identical. Recently a discussion has been initated in England about allocating also 42,5-43,5 GHz to MVDS. Principally the intention is that this band in that case shall be used for multimedia applications.

At higher frequencies (>20 GHz) there are plenty of unutilized frequency bands. The high progation attenuation, however, limits the range and at the same time reduces the energy which will reach neighbouring cells. By that a cellular (cell radius < 4 km) interactive broadband network can be realized, where small antennas with high directivity and built-in down-converters to baseband can be used. DVB (Digital Video Broadcasting) satellite receivers or DAVIC LMDS-receivers can be used to decode videofilms and data. The satellite specification of DVB is internationally accepted, and by that the DVB-receivers are expected to be manufactured in very large volumes. The modulation method which is used is QPSK which is not as spectrum efficent for an individual channel as for instance 64-QAM, but considerably more robust. The total system capacity (spectrum efficiency with QPSK for a surface covering cellular system however is higher if C/I (useful energy in relation to noise energy)- levels are considered, which makes that a frequency band can be reutilized more often, even in a neighbouring cell. The capacity can be further increased by dividing the cell in sectors and utilizing polarisation diversity.

HPMP (High capacity Point to Multipoint)-systems operate in the frequency range 10-27 GHz and are primarily symmetrical with regard to up- and downlink capacity. System range and by that the cell size becomes larger than for higher frequencies (> 27 GHz), whereas available bandwidth is considerably smaller. HPMP-systems are interesting alternatives in thinly populated areas and as initial systems in built-up areas or industrial areas to promptly offer telephony, ISDN or n x 2 Mbit/s connections to companies, and as connection to/between base stations for mobile telephony. The capacity will with a moderate frequency allocation be too small for a general broadband system in built-up area.

MMDS-systems, or wireless cable-TV systems as they are frequently called, often operate around 2,5 GHz and are alternatives to existing cable TV-networks. It is important to explain the difference between MMDS, MVDS and LMDS. MVDS- and LMDS-systems have much in common, whereas MMDS-systems differs fundamentally from the other two.

MMDS is utilized today as a system which shall give maximal coverage of a large area by transmitting a high output power. In the present invention an MMDS-similar unit is utilized which transmits with very low power to make possible an early spatial repetition of the frequencies. By transmitting with a low power one yet can benefit from the favourable propagation properties of the microfrequencies in the neighbourhood of the transmitter, which is the fact that the invention utilizes.

The spectrum for MMDS is limited (<200 MHz i USA and in a few other countries; Europe has not allocated the band), whereas the range, a few tens of kilometres, results in coverage of a large area. For low frequencies which primarily shall be allocated to mobile applications, it is difficult to find free spectrum and to get frequency licence. In order to get an acceptable capacity on the limited bandwidth, 64 QAM-modulation must be used with high demands on C/I which i.a. makes operation by more than one operator more difficult - i.e. two or more operators cannot compete with an MMDS-system within the same geographical area on the same frequency band. Antennas with high directivity at 2,5 GHz are difficult to manufacture and big, which on the whole makes impossible an uplink antenna at each individual subscriber. The present invention however reduces the demands for high directivity of the subscriber antenna. A return channel within present MMDS-frequency bands also would disturb the downlink so heavily that the system would be extremely difficult to realize. What remains is to offer a return channel via a separate frequency band or preferably via other media, for instance the telephone line or DECT. These facts, in addition to the difficulty to get a good frequency utilization factor with a surface covering macrocellular network at MMDS-frequencies, does exclude a (broadband) return channel within the band.

In USA the MMDS-system has got a comparatively large spread, in spite of supply of a limited frequency allocation. For instance can be mentioned that TELE-TV (a cooperation between NYNEX, Bell Atlantic and Pacific Telsis) has ordered 3 million digital set-top-boxes from Thomson with an integrated telephone modem as return channel. The set-top-box is based for MMDS' on the cable specifications of DVB or DAVIC. The modulation is made with 16, 32, 64 or 256 QAM.

Terrestrial TV-systems include systems for distribution of TV, video and data, and also can include a terrestrial return channel. The expansion of a digital terrestrial network in Sweden has been suggested, and within DVB interactivity is investigated, either via the telecommunications network, DECT or terrestrial return channel. The decoding of data, sound and video is made with a DVB terrestrial set-top-box. The modulation is made with OFDM (Orthogonal Frequency Division Multiplexing). In spite of that the modulation is different for MVDS, MMDS and terrestrial TV, the DVB-receivers have many components in common, for instance the same circuits can be used for coding and interleaving.

As has previously been mentioned, LMDS, MVDS and HPMP are examples of ML-systems, whereas MMDS and terrestrial TV are examples of MK-systems.

In order to define more exactly what is meant by ML-systems, respective MK-systems, the following summary is made.

By millimetrewave (ML)-system the following is referred to:
- < 5km general cell radius at LOS
- cellular system
- frequency band >20 GHz
- Low output power (typically <-52 dBW/Hz)
- Broad frequency band (of the magnitude 1 GHz)
- High uplink capacity
- Small directional antennas with high directivity

By microwave (MK)-system the following is referred to:
- < 50 km general cell radius at LOS.
- not necessarily cellular system.
- frequency band <20 GHz.
- Low to high output power (repeaters have low output power, whereas base station has high output power).
- Medium large frequency band (of the magnitude 100 MHz).
- Low-medium uplink capacity.
- Medium sized directional antennas with medium high directivity.

In the IMMBRA-system in Figure 1 both an ML-system and an MK-system are utilized.

Subsystems being part of the IMMBRA-system can be found in Figure 1. The millimetrewave base station antenna (MLBSA) is placed high in relation to the surroundings, for instance on high buildings alternatively in high masts. MLBSA is surface covering by an omnidirectional or sectorized antenna system.

This results in that subscribers within some hundred to a thousand metre from MLBS to a very great extent has line-of-sight. Further there often also prevails line-of-sight to multi-floor buildings, because these are higher than the surroundings (buildings and vegetation). In pace with the distance being increased, however, the probability of line-of-sight will decrease. Especially subscribers in low buildings surrounded by high obstacles will have lower degree of coverage. For ML-systems there is a very strong correlation between coverage and line-of-sight.

The IMMBRA-station antenna (ISA) is placed on a building, a pole or in a mast, so that low propagation attenuation is prevalent towards MLBSA (requires line-of-sight, or strong and stable reflex).

ISA is connected to an IMMBRA-station (IS) which will now be explained with reference to Figure 2.

IS consists of one part which is intended for transmission/reception in millimetrewave band (>20 GHz), and one part which is intended for transmission/reception in microwave band (< 20 GHz). Furthermore IS includes a control module which handles reformatting of data between the MK- and the ML-equipment. IS forwards data between MLBS and MKT (microwave terminal). The communication with MLBS is made on millimetrewave band. The communication with MKT is made on microwave band. ISA has high antenna amplification i direction towards MLBSA.

By MKT (microwave terminal) is related to the equipment at the subscriber's which down-converts the signal to the baseband where it is delivered to another equipment, such as, for instance, TV or computer. MKT is often called microwave-set-top-box.

The information exchange itself is in most cases made between an application in the subscriber's TV or PC and an application in another place, for instance a server.

IS can consist of an MLT (millimetrewave terminal) and an MKBS (microwave base station) or an MKR (microwave repeater). These blocks perform functions according to the general IS-description in Figure 2, where IS is shown as an integrated unit.

MLT is a terminal which manages to decode data, to and from base band, and millimetrewave. This has resemblance to an ordinary subscriber terminal which receives data directly from an MLBS, but manages higher data rates. IS and MKBS has many similarities where both function as a base station on MK-frequency bands. IS, however, has a functionality to put through traffic via the ML-frequency band. An MKBS receives data in baseband format from a fixed connection, for instance copper, fibre or radio link.

Transmodulation (TM) between different modulation methods can be performed to adapt the transmission on ML and MK so that the performance of the system is optimised, see Figure 2. TM can include encoding, interleaving, channel equalization, channel-/link control etc. For instance transmodulation between the following ways of modulation can be a possibility:
QPSK (Quaternary Phase Shift Keying)
QAM (Quadrature Amplitude Modulation)
OFDM (Orthogonal Frequency Division Multiplexing)

Circuits from the SMATV CATV-industry can be utilized for TM. These there are used to transform QPSK-modulated satellite signals to QAM-signals when these shall be "transported" in cable networks.

ISA MK and ISA ML can be integrated as can be seen in Figure 2.

In certain situations, however, it can be an advantage with separate antenna units, i.a. to give ISA ML line-of-sight to MLBSA, and to make it possible to optimize the coverage one wants that ISA MK shall give.

ISA MK also can have directivity, which reduces disturbances for base stations and other subscribers.

The MK-terminal antenna (MKTA) is placed on, or at, the subscriber's house or appartment, depending on which coverage that is wanted. Mast can be used making the MKTA in position above surrounding obstacles.

Because the commmunication with the subscriber is made on microwave band, often also "not-line-in-sight"-connections can be established. In this way for instance low buildings in many cases can be covered in spite of surrounding high vegetation, if any.

The MK-communication is made at lower height with elements of "not-line-of-sight", so sufficiently good frequency repeating qualities are achieved. The ML-communication is made at high height, which increases the probability of line-of-sight. The frequency-repeating properties at ML are sufficently good, because the ML-band is very broad and the propagation attenuation high.

A subscriber which is within LOS-coverage of MLBS can and should be connected directly via this, and consequently need not communicate via the IMMBRA-station (IS), see Figure 4. In that way one maximizes the use of the broad ML-band and reduces the capacity load on the narrower MK-band.

The combination of ML- and MK-systems contributes to increase the separation of MK-systems. MLR (millimetrewave repeaters) of the same type as the ML-system can be used to get sufficient isolation between two MK-areas to reduce disturbances (see Figure 3).

Infrastructure can be shared by MK- and ML-systems. This applies to expensive infrastructure such as video coders, program offer, video servers and transport networks.

MK-systems can be used for macro-cell applications, i.e. for cell radii over 5 km. An MKBS or IS also can catch exceptional subscribers in thinly populated areas with directional antenna (see Figure 3, upper left corner for MKBS, respective upper right corner for IS). For subscribers who only have need for certain interactivity, MK-systems also can be used in combination with DECT or copper modems.

IS as macrocell only is suitable for an IS which is in an outer area where IS is used with directional antenna to cover subscribers outside the densely populated area. By that subscribers up to about ten kilometres from the community can be covered.

Within densely populated area for narrow- to broadband interactivity MK-systems only shall be used in micro-/small cell applications connected via MLBS or HC (main central), see Figure 3.

Combined DVB-receivers, i.e. receivers which manage to decode several of the applications are being developed. This results in that Telia can sell the same box to subscribers who are using different systems, and that customers need not change box if they change antenna - /radio system.

In Figure 4 is described how selection of radio access form for a specific subscriber connection is made. Figure 4 shows a flow chart for a protocol for selection of radio access form for broadband, interactive transmissions. If a subscriber is within line-of-sight distance from MLBS, the subscriber should directly be connected to this station. This of course means that one utilizes the broad ML-band, and reduces capacity load on the narrow MK-band. If the subscriber is not covered by MLBS, it should be decided according to protocol whether the subscriber is covered by IS. If subscriber is not covered by IS, it is decided whether broadband, interactive need exists. If this need does not exist, it is decided whether subscriber is covered by MKBS etc.

It should be realized that the protocol principally relates to densely populated area. In thinly populated area MKBS can be utilized for broadband, interactive transmissions towards main central (HC), see Figure 3.

Figure 3 shows, as has ben mentioned above, a possible IMMBRA-scenario. The lined area indicates densely populated area. Within this area broadband, interactive coverage area is created directly towards MLBS or towards IS via MLBS (MKBS microcell directly connected to HC also can give broadband, interactive connection, see Figure 3). Within densely populated area broadband, interactive connection, however, is not created directly towards macrocell MKBS. HS (the main central) is the unit which is superior to the base stations and which is prime port of the system towards the world around/the transport network.

Notice that the area is covered by drawn base stations where the rings with thin lines only indicate areas where there is a great probability that the subscriber can be covered directly by MLBS (millimetrewave base station). With a line-of-sight range for MLBS of 5 km, this means that all places in the built-up area could be covered from several MLBS' if there are no obstacles, so called "redundant coverage". Redundant coverage contributes to increase the degree of coverage and is a good method to increase the degree of coverage from, for instance, 50 to about 80%. The method after that probably will be very expensive to apply to further increase the degree of coverage. The invention, however, can solve this problem, and is probably a more economic method to achieve high degrees of coverage (over 80%).

The above mentioned is only to be regarded as an advantageous embodiment of the invention, and the extent of protection of the invention is only limited by what is indicated in the enclosed patent claims.

## Claims

1. Method for controlling connection in a system for broadband radio access, which system integrates a microwave system hereinafter referred as MK-system with a millimetre wave system hereinafter referred as ML-system and comprises a first type base station (MLBS) devised for millimetre wave communication, a second type base station (IS) devised for integrated micro- and millimetre wave communication for broadband radio access hereinafter referred as IMMBRA, and a third type base station for microwave communication (MKBS), the method comprising the steps of using said microwave system at not line-of-sight hereinafter referred as LOS connections between a base station and a subscriber terminal, and using said millimetre wave system at line-of-sight connection between said base station and said subscriber terminal, wherein a protocol controls connection of just any subscriber terminal to a base station such that:
a) a subscriber terminal which is within LOS-coverage of a first type base station (MLBS) is connected directly to said first type base station, and does not communicate via a second type base station (IS);
b) a subscriber terminal which is within the coverage area of a second type base station, but not within LOS-coverage of a first type base station (MLBS), is connected to said second type base station (IS);
c) a subscriber terminal which is within the coverage area of a third type base station (MKBS) but not within LOS-coverage of first (MLBS) or within coverage of second (IS) type base station, is connected to said third type base station (MKBS).

2. Method according to claim 1, for scenario b), comprising the steps of:
a first type base station (MLBS) which is not in LOS with the subscriber terminal communicating information by radio on a millimetre hereinafter referred as ML band to said second type base station (IS);
frequency-transposing said information to microwave hereinafter referred as MK band in said second type base station; and
transmitting said information on the microwave band by means of said second type base station to said subscriber terminal.

3. Method according to claim 2, comprising the step of:
a transmodulator (TM) unit in a control module (SM-unit) of the second type base station (IS) utilizes different modulation methods, preferably QPSK, QAM, OFDM, for adapting the radio transmission for the millimetre band and the microwave band.

4. Method according to claim 3, comprising the step of:
the transmodulator (TM) unit performing transmodulation including at least coding, interleaving, channel equalization and channel-/link control.

## Patentansprüche

1. Verfahren zum Verbindungs steuern in einem System für Breitband-Funkzugriff, wobei das System ein Mikrowellensystem, im Folgenden MK-System genannt, mit einem Millimeterwellensystem, im Folgenden ML-System genannt, integriert und eine Basisstation (MLBS) von einem ersten Typ, die für Millimeterwellenkommunikation ausgerüstet ist, eine Basisstation (IS) von einem zweiten Typ, die für integrierte Mikro- und Millimeterwellenkommunikation für Breitbandradiozugriff, im Folgenden IMMBRA genannt, ausgerüstet ist, und eine Basisstation eines dritten Typs für Mikrowellenkommunikation (MKBS) aufweist, wobei das Verfahren die Schritte aufweist der Verwendung des Mikrowellensystems bei Nicht-Sichtverbindungen, im Folgenden LOS-Verbindungen genannt, zwischen einer Basisstation und einem Teilnehmeranschluss und der Verwendung des Millimeterwellensystems bei Sichtverbindung zwischen der Basisstation und dem Teilnehmeranschluss, wobei ein Protokoll die Verbindung von gerade jedem Teilnehmeranschluss zu einer Basisstation derart steuert, dass:
a) ein Teilnehmeranschluss, der innerhalb der LOS-Abdeckung einer Basisstation (MLBS) des ersten Typs ist, direkt mit der Basisstation vom ersten Typ verbunden wird und nicht über eine Basisstation (IS) vom zweiten Typ kommuniziert,
b) ein Teilnehmeranschluss, der innerhalb des Abdeckungsbereichs einer Basisstation vom zweiten Typ ist, aber nicht innerhalb der Abdeckung einer Basisstation (MLBS) vom ersten Typ ist, mit der Basisstation (IS) vom zweiten Typ verbunden wird,
c) ein Teilnehmeranschluss, der innerhalb des Abdeckungsbereichs einer Basisstation (MKBS) vom dritten Typ ist, aber nicht innerhalb der LOS-Abdeckung der Basisstation vom ersten Typ (MLBS) oder innerhalb der Abdeckung vom zweiten Typ (IS), mit der Basisstation (MKBS) vom dritten Typ verbunden wird.

2. Verfahren nach Anspruch 1, für das Szenario b) mit den Schritten:
eine Basisstation (MLBS) vom ersten Typ, die nicht in LOS mit dem Teilnehmeranschluss ist, der Information über Funk in einem Millimeterband, im Folgenden ML-Band genannt, kommuniziert mit der Basisstation (IS) vom zweiten Typ.
Frequenzumsetzung der Information in das Mikrowellenband, im Folgenden MK-Band genannt, in der Basisstation vom zweiten Typ, und
Übermitteln der Information auf dem Mikrowellenband mittels der Basisstation vom zweiten Typ an den Teilnehmeranschluss.

3. Verfahren nach Anspruch 2 mit dem Schritt:
eine Transmodulationseinheit (TM) in einem Steuermodul (SM-Einheit) in der Basisstation (IS) vom zweiten Typ verwendet unterschiedliche Modulationsverfahren, vorzugsweise QPSK, QAM, OFDM, zum Anpassen der Funkübertragung für das Millimeterband und das Mikrowellenband.

4. Verfahren nach Anspruch 3 mit dem Schritt:
die Transmodulatoreinheit (TM) führt Transmodulation durch, einschließlich zumindest Codierung, Verschachtelung, Kanalausgleich und Kanal-/Verbindungssteuerung.

## Revendications

1. Procédé de commande de connexion dans un dispositif permettant d'assurer un accès radio à large bande, lequel dispositif intègre un dispositif à micro-ondes, appelé ci-après dispositif MK, avec un dispositif à ondes millimétriques, appelé ci-après dispositif ML, et comprend une station de base du premier type (MLBS) définie afin d'assurer une communication en ondes millimétriques, une station de base du deuxième type (IS) définie afin d'assurer une communication en ondes micrométriques et millimétriques intégrées afin d'assurer un accès radio à large bande, appelé ci-après accès IMMBRA, et une station de base du troisième type afin d'assurer une communication en micro-ondes (MKBS), le procédé comprenant les étapes d'utilisation dudit dispositif à micro-ondes au niveau de connexions sans visibilité directe, appelée ci-après LOS, entre une station de base et un terminal d'abonné, et l'utilisation dudit dispositif en ondes millimétriques au niveau d'une connexion à visibilité directe entre ladite station de base et ledit terminal d'abonné, dans lequel un protocole commande la connexion d'un seul terminal d'abonné quelconque avec une station de base de telle sorte que :
a) un terminal d'abonné qui est à l'intérieur d'une couverture LOS d'une station de base du premier type (MLBS) est connecté directement à ladite station de base du premier type, et ne communique pas par l'intermédiaire d'une station de base du deuxième type (IS) ;
b) un terminal d'abonné qui est à l'intérieur de la zone de couverture d'une station de base du deuxième type, mais non à l'intérieur d'une couverture LOS d'une station de base du premier type (MLBS), est connecté à ladite station de base du deuxième type (IS) ;
c) un terminal d'abonné qui est à l'intérieur de la zone de couverture d'une station de base du troisième type (MKBS) mais non à l'intérieur d'une couverture LOS d'une station de base du premier type (MLBS) ou à l'intérieur d'une couverture d'une station du deuxième type (IS), est connecté à ladite station de base du troisième type (MKBS).

2. Procédé selon la revendication 1, pour le scénario b), comprenant les étapes de :
communication, par une station de base du premier type (MLBS) qui n'est pas à visibilité LOS avec le terminal d'abonné, d'informations par radio sur une bande millimétrique appelée ci-après ML à ladite station de base du deuxième type (IS) ;
transposition en fréquence desdites informations en micro-ondes, appelées ci-après MK dans ladite station de base du deuxième type ; et
transmission desdites informations sur la bande en micro-ondes au moyen de ladite station de base du deuxième type audit terminal d'abonné.

3. Procédé selon la revendication 2, comprenant l'étape de :
utilisation, par une unité formant transmodulateur (TM) dans un module de commande (unité SM) de la station de base du deuxième type (IS) de différents procédés de modulation, de préférence, QPSK, QAM, OFDM, afin d'adapter la transmission radio pour la bande millimétrique et la bande en micro-ondes.

4. Procédé selon la revendication 3, comprenant l'étape de :
réalisation d'une transmodulation, par l'unité formant transmodulateur (TM), comportant au moins le codage, l'imbrication, l'égalisation de canal et la commande de canal/liaison.
